# EUROPEAN PATENT APPLICATION

(11) **EP 2 759 973 A1**
(43) Date of publication of application: **30.07.2014**
(21) Application number: 14152187.2
(22) Date of filing: 22.01.2014
(51) Int. Cl.: G06Q 30/02

(54) **Customer category analysis device, customer category analysis system and customer category analysis method**

(30) Priority: 29.01.2013 JP 2013014074
(71) Applicant: Panasonic Corporation, Kadoma-shi Osaka 571-8501 (JP)
(72) Inventor: Kunio, Hirakawa, Osaka, 540-6207 (JP); Yoshinobu, Uno, Osaka, 540-6207 (JP); Yuichi, Nakahata, Osaka, 540-6207 (JP)
(74) Representative: Unland, Jochen Hermann

(57) **Abstract**

A customer category analysis device includes: a customer category identification unit configured to identify a customer category of each customer based on image information provided by an imaging device capturing images of customers and obtain customer category information indicating a result of identification; a customer category ratio obtaining unit configured to obtain customer category ratios based on the customer category information; a customer number obtaining unit configured to receive sales information from a sales information management device and obtain a number of customers based on the sales information; a category-based customer number obtaining unit configured to obtain a number of customers in each category by reflecting the customer category ratios on the number of customers; and an output information generation unit configured to generate output information representing a result of analysis based on the number of customers in each category.

## Description

### TECHNICAL FIELD

The present invention relates to a customer category analysis device, customer category analysis system and customer category analysis method for analyzing customer categories of customers visiting a commercial establishment.

### BACKGROUND OF THE INVENTION

There are a variety types of commercial establishments including restaurants such as casual dining restaurants, retail stores such as convenience stores, etc. Irrespective of the types of commercial establishments, customers of different customer categories (gender, age, etc.) tend to prefer different foods or goods, and therefore, developing measures for improving the menu or the assortment of goods provided at the commercial establishment based on a result of analysis of the customer categories of the customers visiting the commercial establishment is beneficial to improve the customer satisfaction and increase the sales of the commercial establishment.

To meet such a need, it is known conventionally to use image recognition technology to identify the category of each customer in a retail store such as a convenience store and generate customer category-added sales information, in which a customer category is associated with the sales information of an individual good purchased by the customer (see JP2010-055248A). In comparison with an approach in which a salesperson determines and enters the category of each customer, this technology can reduce the burden of the salesperson and avoid variation in the determination made by the salesperson. Further, acquisition of the customer category-added sales information makes it possible to know the customer category characteristics of each commercial establishment and to know what good is preferred by which category of customers. Such information is beneficial in developing measures for improving the assortment of goods or the like.

In a retail store such as a convenience store, customers pay for their purchases at a checkout counter in front of a salesperson one customer at a time, and image capture for customer category identification in the conventional technology is performed on each customer while the customer is paying substantially in a stationary state in front of the checkout counter. Therefore, the customer category identification can be performed with high accuracy and the number of customers in each category can be obtained without a substantial error.

On the other hand, with regard to a restaurant such as a casual dining restaurant, in a case where customers visit the restaurant in a group, it is often the case that some member(s) in the group pays for all their orders including those of the other members in the group, and therefore, the customer category identification performed at the time of checkout may fail to detect the customers who do not have to check out at the checkout counter. Thus, customer category data may not be obtained with sufficient accuracy.

To prevent failure to detect customers in the customer category identification, it may be conceived to perform customer category identification on each customer entering through the doorway of the restaurant. However, in such a case, the customer category identification needs to be performed on a moving person, and thus, a same person may be detected more than one time. This can result in a number of customers obtained that is significantly larger than the actual number, creating a problem that the number of customers in each category cannot be obtained with sufficient accuracy, and analysis of the customer categories cannot be performed with high accuracy.

### SUMMARY OF THE INVENTION

The present invention is made to solve the foregoing problems in the prior art, and a primary object of the present invention is to provide a customer category analysis device, customer category analysis system and customer category analysis method configured to be capable of performing analysis of the customer categories of the customers visiting a commercial establishment with high accuracy.

To achieve the foregoing object, in a first aspect of the present invention, there is provided a customer category analysis device for analyzing customer categories of customers visiting a commercial establishment, including: a customer category identification unit configured to identify a customer category of each customer based on image information provided by an imaging device capturing images of customers and obtain customer category information indicating a result of identification; a customer category ratio obtaining unit configured to obtain customer category ratios based on the customer category information; a customer number obtaining unit configured to receive, from a sales information management device that manages sales information relating to customer's order and payment, the sales information, and obtain a number of customers based on the sales information; a category-based customer number obtaining unit configured to temporally associate a time period in which the customer category ratios are obtained by the customer category ratio obtaining unit with a time period in which the number of customers is obtained by the customer number obtaining unit, and determine a number of customers in each category by reflecting the customer category ratios on the number of customers; and an output information generation unit configured to generate output information representing a result of analysis based on the number of customers in each category.

In this structure, the customer category identification performed by identifying categories of customers based on image information provided by the imaging device capturing images of customers may fail sometimes, and only pieces of customer category information of customers for whom the customer category identification was successful are collected. However, failure of customer category identification does not occur particularly frequently for a particular customer category, and occurs uniformly for all customer categories. Further, the customer category identification may result in a significant error in the detected number of customers when a same person is detected multiple times. However, the multiple detection of a same person also does not occur particularly frequently for a particular customer category, and occurs uniformly for all customer categories. Therefore, even though the number of customers detected by the customer category identification may have a significant error, it can be ensured that the customer category ratios obtained have sufficient accuracy. On the other hand, the number of customers obtained from the sales information provided by the sales information management device also has sufficient accuracy. Therefore, by reflecting the customer category ratios obtained based on the image information on the number of customers obtained based on the sales information, it is possible to obtain the number of customers in each category with high accuracy. This allows analysis of the customer categories to be performed with high accuracy, thereby providing information useful in developing measures for improving the customer satisfaction and increasing the sales and profit.

In a second aspect of the present invention, the output information generation unit generates, as the output information, customer category trend information relating to a trend of change in the number of customers in each category based on a time series of number of customers in each category obtained for every predetermined time period.

According to this structure, a user can know how the customer category characteristics change depending on the time slot (predetermined time period). Therefore, by making preparations at the commercial establishment in accordance with the change in the customer category characteristics, it is possible to improve the customer satisfaction and increase the sales and profit.

In a third aspect of the present invention, the customer category trend information represents a ratio of the number of customers in each category to a total number of customers obtained every said predetermined time period within daily opening hours of the commercial establishment.

According to this structure, a user can know how the total number of customers and the number of customers in each category change depending on the time period, where the number of customers in each category provides a breakdown of the total number of customers.

In a fourth aspect of the present invention, the customer category information includes at least one of gender and age.

According to this structure, customer category analysis can be performed with high accuracy based on the customer categories defined based on either gender or age or on both gender and age.

In a fifth aspect of the present invention, there is provided a customer category analysis system for analyzing customer categories of customers visiting a commercial establishment, including: an imaging device capturing images of customers; a sales information management device configured to manage sales information relating to customer's order and payment; and a plurality of information processing devices, wherein the plurality of information processing devices jointly include: a customer category identification unit configured to identify a customer category of each customer based on image information provided by the imaging device and obtain customer category information indicating a result of identification; a customer category ratio obtaining unit configured to obtain customer category ratios based on the customer category information; a customer number obtaining unit configured to receive the sales information from the sales information management device and obtain a number of customers based on the sales information; a category-based customer number obtaining unit configured to temporally associate a time period in which the customer category ratios are obtained by the customer category ratio obtaining unit with a time period in which the number of customers is obtained by the customer number obtaining unit, and determine a number of customers in each category by reflecting the customer category ratios on the number of customers; and an output information generation unit configured to generate output information representing a result of analysis based on the number of customers in each category.

According to this structure, it is possible to obtain the number of customers in each category with high accuracy, similarly to the structure in the first aspect of the present invention.

In a sixth aspect of the present invention, one of the information processing devices is set up at the commercial establishment and includes at least the customer category identification unit.

According to this structure, since the customer category information obtained by the customer category identification unit has a small amount of data, even if the other units, such as the customer number obtaining unit, category-based customer number obtaining unit, and output information generation unit, are provided to another information processing device set up at a place other than the commercial establishment, such as at a management office overseeing multiple commercial establishments, the communication load can be small. Thus, it is easy to operate the system in the form of a wide area network.

In a seventh aspect of the present invention, one of the information processing devices constitutes a cloud computing system and includes at least the customer category identification unit.

According to this structure, although the process executed by the customer category identification unit requires a large amount of computation, this is achieved by the information processing device constituting a cloud computing system, and therefore, it is not necessary to prepare a high-speed information processing device on the user side; namely, at the commercial establishment or the like. Further, since the process executed by the other units; namely, the customer number obtaining unit, category-based customer number obtaining unit, and output information generation unit requires a small amount of computation, the functions of these units can be implemented as extended functions of an information processing device set up at the commercial establishment to serve as the sales information management device, and this can reduce the cost born by the user.

In an eighth aspect of the present invention, the imaging device is configured to capture images of customers entering through a doorway of the commercial establishment.

According to this structure, since the customer category identification is performed based on the image information obtained by capturing images of customers entering through the doorway of the commercial establishment, it is possible to perform the customer category identification on all customers visiting the commercial establishment. In a case where the customer category identification is performed based on the image information obtained by capturing images of customers entering through the doorway of the commercial establishment, the customer category identification needs to be performed on a moving person, and thus, a same person may be detected multiple times, causing the number of customers obtained based on the customer category identification to be significantly larger than the actual number. However, in this embodiment, the number of customers is obtained from the sales information provided by the sales information management device, and the number of customers in each category is obtained by reflecting the customer category ratios obtained from the image information on the number of customers obtained from the sales information, and thus, the number of customers in each category can be obtained with high accuracy.

In a ninth aspect of the present invention, there is provided a customer category analysis method for analyzing customer categories of customers visiting a commercial establishment, including: identifying a customer category of each customer based on image information provided by an imaging device capturing images of customers, and obtaining customer category information indicating a result of identification; obtaining customer category ratios based on the customer category information; receiving, from a sales information management device that manages sales information relating to customer's order and payment, the sales information, and obtaining a number of customers based on the sales information; temporally associating a time period in which the customer category ratios are obtained with a time period in which the number of customers is obtained and determining a number of customers in each category by reflecting the customer category ratios on the number of customers; and generating output information representing a result of analysis based on the number of customers in each category.

According to this structure, it is possible to obtain the number of customers in each category with high accuracy, similarly to the structure in the first aspect of the present invention.

### BRIEF DESCRIPTION OF THE DRAWINGS

Now the present invention is described in the following in terms of preferred embodiments thereof with reference to the appended drawings, in which:
FIG. 1 is a diagram showing an overall structure of a customer category analysis system according to an embodiment of the present invention;
FIG. 2 is a plan view showing an example of an interior layout of a restaurant;
FIG. 3 is a block diagram schematically showing a functional structure of a PC 3 set up at the restaurant;
FIG. 4 is an explanatory diagram showing an example of an analysis result screen displaying customer category trend information;
FIG. 5 is an explanatory diagram for explaining a customer category trend obtaining process executed by a customer category analysis unit 32;
FIG. 6 is a flowchart showing a procedure of the customer category trend obtaining process executed by the customer category analysis unit 32;
FIG. 7 is an explanatory diagram showing an example of an analysis result screen displaying customer category vs. menu item information;
FIG. 8 is an explanatory diagram showing an analysis result screen displaying customer group type-based order trend information; and
FIG. 9 is a flowchart showing a procedure of a customer group type-based order trend obtaining process executed by the customer category analysis unit 32.

### DETAILED DESCRIPTION OF THE PREFERRED EMBODIMENTS

In the following, description will be made of an exemplary embodiment of the present invention with reference to the drawings.

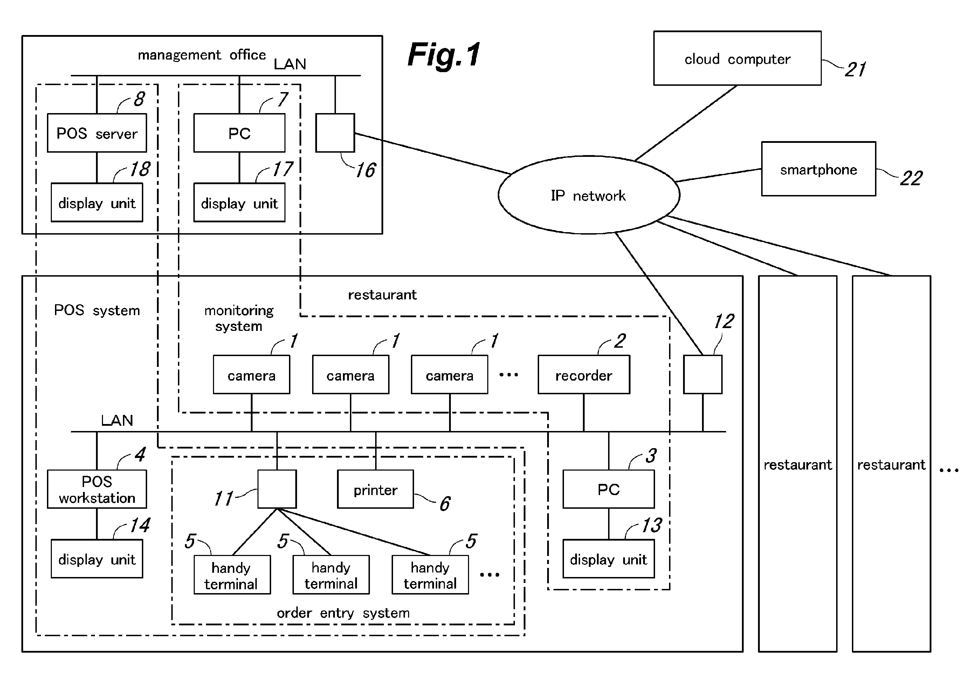

FIG. 1 is a diagram showing an overall structure of a customer category analysis system according to this embodiment. This customer category analysis system is designed for a casual dining restaurant chain, for example, and includes cameras (imaging device) 1, a recorder (image recording device) 2, a personal computer (PC) (customer category analysis device, browser device) 3, a point of sale (POS) workstation (sales information management device) 4, handy terminals (order entry device) 5, and a printer 6, which are set up at each of the multiple restaurants within the chain. Further, the customer category analysis system includes a PC (browser device) 7 and a POS server (sales information management device) 8, which are set up at a management office overseeing the multiple restaurants.

In each restaurant, the cameras 1, recorder 2, PC 3, POS workstation 4 and printer 6 are connected to a local area network (LAN) together with a wireless relay device 11 that relays the communication of the handy terminals 5 and a router 12 for connection with an Internet Protocol (IP) network. The PC 3 and the POS workstation 4 have respective display units (display devices) 13, 14 connected thereto. In the management office, the PC 7 and the POS server 8 are connected to a LAN together with a router 16 for connection with the IP network. The PC 7 and the POS server 8 have respective display units (display devices) 17, 18 connected thereto.

The cameras 1, recorder 2, PC 3 set up at each restaurant and PC 7 set up at the management office constitute a monitoring system for monitoring the interior of the restaurant. The cameras 1 are set up at appropriate locations in the restaurant to capture images of the various areas in the restaurant, and image information obtained thereby is recorded by the recorder 2. The PC 3 set up at the restaurant and the PC 7 set up at the management office can display the real-time images of various areas in the restaurant captured by the cameras 1 or the past images of various areas in the restaurant recorded by the recorder 2, and this allows a user at the restaurant or the management office to check the situation in the restaurant.

The handy terminals 5, wireless relay device 11 and printer 6 set up at each restaurant constitute an order entry system for accepting customer orders. Each handy terminal 5 is to be carried by a restaurant staff member (such as a waiter or a waitress), whereby the staff member, upon taking orders from customers, can enter the content of the orders (ordered menu items, number of orders for each menu item) into the handy terminal 5. The printer 6 is set up in the kitchen, and when the staff member enters order content into the handy terminal 5, the order content is output from the printer 6 so that the order content is communicated to the kitchen staff.

The POS workstation 4 and the order entry system set up at each restaurant and the POS server 8 set up at the management office constitute a POS (point of sale) system that manages sales information relating to the sales of each restaurant. This POS system manages, as the sales information, order content, order time, checkout time, order method, number of customers, etc. This sales information is shared between the POS workstation 4 and the POS server 8. The POS workstation 4 manages the sales information of the restaurant at which the POS workstation 4 is set up, and the POS server 8 manages the sales information of all member restaurants under its management.

Each handy terminal 5 constituting the order entry system is adapted to allow the restaurant staff member to enter order information other than the order content (ordered menu items, number of orders for each menu item), such as a number of customers sitting at a table, table number (seat number), etc., and the order information entered is transmitted to the POS workstation 4. In addition to the function for managing the sales information, the POS workstation 4 has a register function for performing checkout, and is set up at the checkout counter. This POS workstation 4 is connected with a cash drawer and a receipt printer not shown in the drawings. The POS workstation 4 generates sales information based on the order information transmitted from the handy terminals 5 and checkout information obtained at the time of checkout.

The PC 3 set up at the restaurant is configured to realize a customer category analysis device that performs analysis of the customer categories of customers visiting the restaurant. The analysis result information generated by the PC 3 set up at the restaurant can be displayed on the PC 3 itself, and also, is transmitted to the PC 7 set up at the management office, such that the information can be displayed on the PC 7. Thus, the PCs 3 and 7 are each configured to serve as a browser device that allows a user to view the analysis result information.

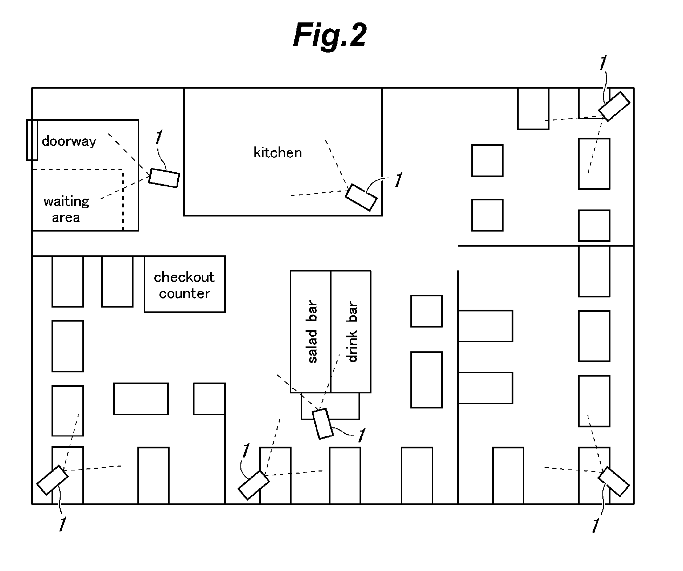

FIG. 2 is a plan view showing an example of an interior layout of a restaurant. The restaurant includes a doorway, a waiting area, a checkout counter, tables with seats, a salad bar, a drink bar, and a kitchen. The salad bar and the drink bar are a buffet-style table or counter on which salad components and drinks are provided, respectively, for customers to serve themselves. Further, multiple cameras 1 are set up at appropriate locations in the restaurant. Specifically, in the example shown in FIG. 2, the cameras 1 are set up to capture images at the doorway, tables, salad bar and kitchen.

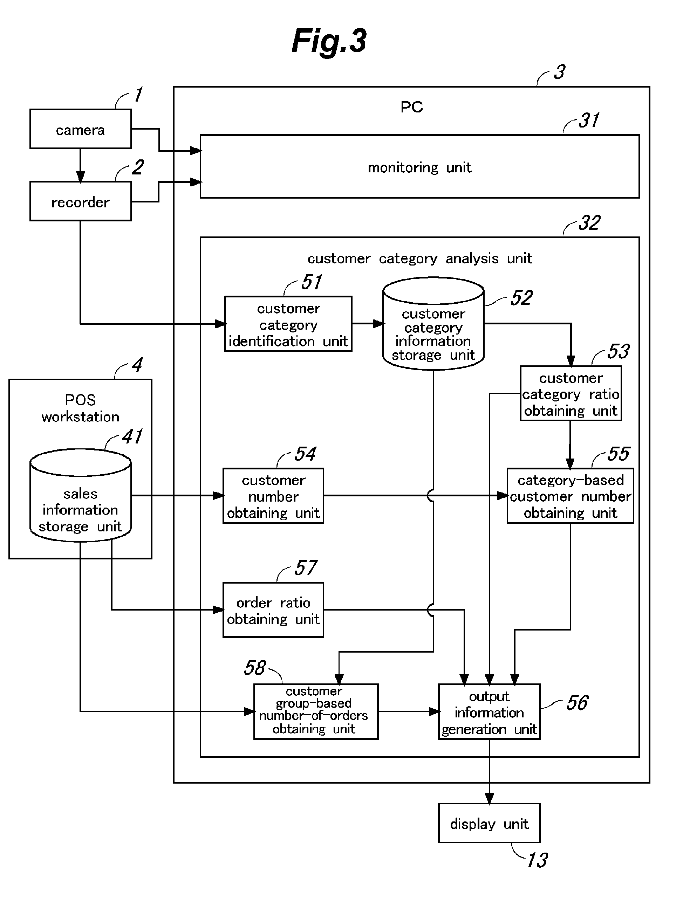

FIG. 3 is a block diagram schematically showing a functional structure of the PC 3 set up at a restaurant. The PC 3 includes a monitoring unit 31 and a customer category analysis unit 32. The monitoring unit 31 allows the PC 3 to function as a monitoring system for monitoring the interior of the restaurant. The monitoring unit 31 controls the operation of the cameras 1 and the recorder 2 and enables a user to have a real-time view of the images of various areas in the restaurant captured by the cameras 1 and to view the images of various areas in the restaurant recorded in the recorder 2. The customer category analysis unit 32 performs analysis of the customer categories of customers visiting the restaurant.

It is to be noted that the monitoring unit 31 and the customer category analysis unit 32 are realized by executing programs for monitoring and customer category analysis by the CPU of the PC 3. These programs may be pre-installed in the PC 3 serving as an information processing device to embody a device dedicated for monitoring and customer category analysis functions, or may be provided to a user in the form stored in an appropriate recording medium as an application program that can be run on a general-purpose OS.

Next, description will be made of a customer category trend obtaining process executed by the customer category analysis unit 32 of the PC 3 set up at a restaurant. The customer category trend obtaining process is executed to obtain customer category trend information indicating a trend of change in the number of customers in each category depending on the time slot (predetermined time period).

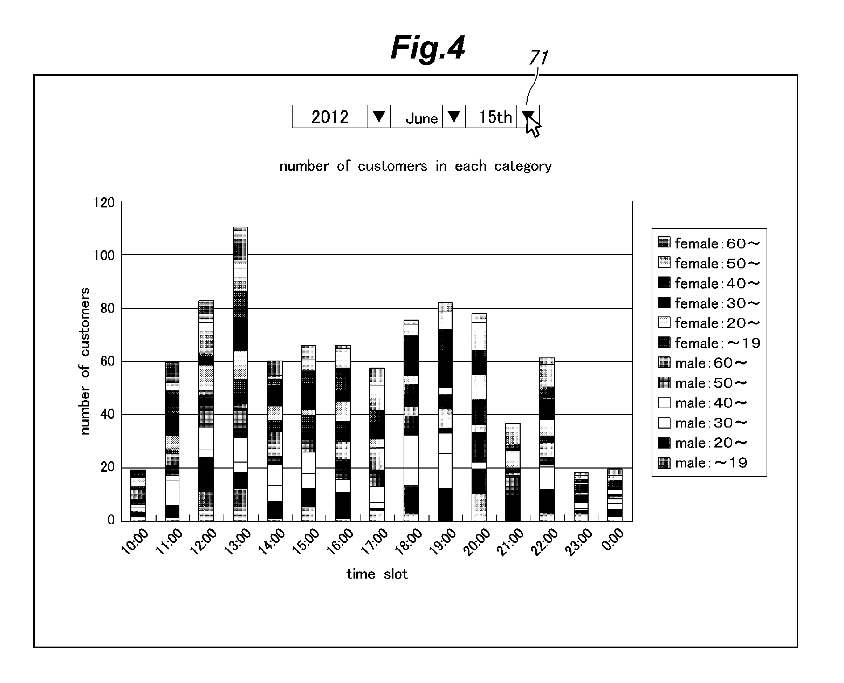

FIG. 4 is an explanatory diagram showing an example of an analysis result screen displaying customer category trend information. This analysis result screen is to be displayed on the display unit 13 of the PC 3 set up at the restaurant and the display unit 17 of the PC 7 set up at the management office. This analysis result screen includes a stacked bar chart that shows, as the customer category trend information, the number of customers in each category relative to the total number of customers for each time slot during opening hours of the restaurant (10:00 AM to 1:00 AM) on a designated date. From this analysis result screen, a user can understand the characteristics of a change in the total number of customers as well as the number of customers in each category depending on the time slot, where the number of customers in each category provides a breakdown of the total number of customers.

This analysis result screen further includes an operation element 71 for designating a year, month and day so that the user can choose a date by operating the operation element 71 and view the analysis result on the chosen date. It is to be noted that, in a case where the analysis result screen is displayed on the display unit 17 of the PC 7 set up at the management office, an operation element for allowing the user to select a restaurant is preferably displayed in the analysis result screen.

This analysis result screen is generated by a customer category trend obtaining process executed by the customer category analysis unit 32 of the PC 3. The customer category analysis unit 32 includes, as units relating to the customer category trend obtaining process, a customer category identification unit 51, a customer category information storage unit 52, a customer category ratio obtaining unit 53, a customer number obtaining unit 54, a category-based customer number obtaining unit 55, and an output information generation unit 56, as shown in FIG. 3.

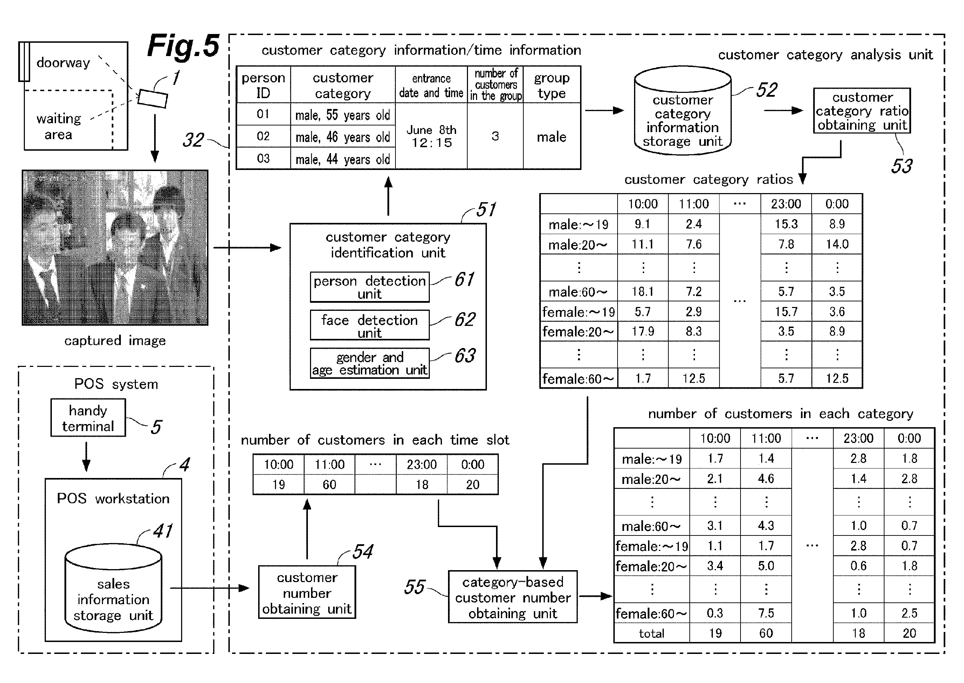

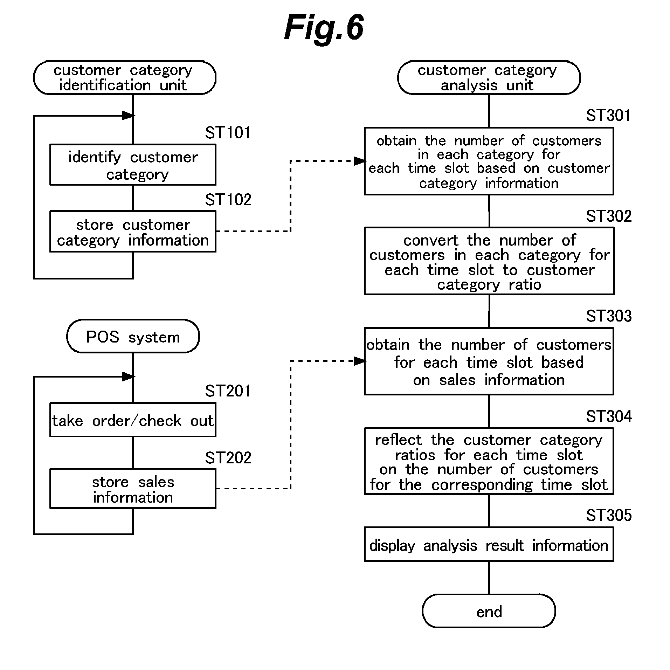

FIG. 5 is an explanatory diagram for explaining the customer category trend obtaining process executed by the customer category analysis unit 32. FIG. 6 is a flowchart showing a procedure of the customer category trend obtaining process executed by the customer category analysis unit 32. In the following, the content of the process executed by the various units in the customer category analysis unit 32 shown in FIG. 3 will be described with reference to FIGS. 5 and 6.

As shown in FIG. 5, the customer category identification unit 51 executes a process of identifying a customer category (gender and age) of each customer visiting the restaurant based on image information provided by a camera 1 set up to capture images of customers entering through the doorway of the restaurant (ST101 in FIG. 6), and customer category information indicating a result of identification is cumulatively stored in the customer category information storage unit 52 together with time information indicating the time when each customer entered the restaurant; namely, the time when an image of the customer was captured by the camera 1 (ST102 in FIG. 6).

The customer category identification unit 51 includes a person detection unit 61 that detects a person(s) in a captured image, a face detection unit 62 that detects a face of each person detected, and a gender and age estimation unit 63 that estimates the gender and age of the person (customer) based on the detected face image. The person detection unit 61, face detection unit 62 and gender and age estimation unit 63 may be realized by use of known image recognition technology (person recognition technology, person tracking technology, face recognition technology, gender and age estimation technology).

The person detection unit 61 uses known person recognition technology to determine whether an object detected in each frame image captured by the camera 1 is a person, and uses known person tracking technology to track a person(s) moving between multiple frame images. The face detection unit 62 uses known face recognition technology to collect multiple face images of each person from multiple frame images based on the result of person tracking performed by the person detection unit 61. The gender and age estimation unit 63 uses known gender and age estimation technology to estimate the customer category (gender and age) of each person from the face images of the person collected by the face detection unit 62.

The customer category ratio obtaining unit 53 obtains pieces of customer category information cumulatively stored in the customer category information storage unit 52, and based on the pieces of customer category information, executes a process of obtaining customer category ratios for each time slot. In this customer category ratio obtaining process, first, the number of customers is totaled separately for each time slot (one hour), which defines a unit time period for totaling, and for each customer category, using the customer category of each customer contained in each piece of customer category information, such that the number of customers in each category for each time slot is obtained (ST301 in FIG. 6). This process of totaling for each time slot requires the time when the customer category of each customer was obtained, and the time information indicating such time (namely, the time when the customer entered the restaurant) can be retrieved from the customer category information storage unit 52. Then, the number of customers in each category (count value) for each time slot is converted to a customer category ratio (percent). Specifically, the number of customers in each category for each time slot is divided by the total number of customers for the corresponding time slot to provide a customer category ratio (the composition ratio of each customer category) for each time slot (ST302 in FIG. 6).

On the other hand, in the POS system, when a restaurant staff member takes orders from a customer(s) (ST201 in FIG. 6), the staff member counts the number of customers and enters the number into a handy terminal 5, so that the number of customers and the order time, at which the orders were taken, are transmitted to the POS workstation 4. The POS workstation 4 includes a sales information storage unit 41, and the number of customers and the order time are cumulatively stored in the sales information storage unit 41 as sales information (ST202 in FIG. 6). Also, when the POS workstation 4 is operated by a restaurant staff member to perform checkout (ST201 in FIG. 6), the checkout time, at which the checkout was performed, is cumulatively stored in the sales information storage unit 41 (ST202 in FIG. 6).

The customer number obtaining unit 54 obtains pieces of sales information cumulatively stored in the sales information storage unit 41 of the POS workstation 4, and based on the pieces of sales information, executes a process of obtaining the number of customers (total number of customers) for each time slot. In this customer number obtaining process, the number of customers contained in each piece of sales information is totaled separately for each time slot (one hour), which defines a unit time period for totaling, whereby the number of customers for each time slot is obtained (ST303 in FIG. 6). This process of totaling for each time slot requires the time when the number of customers in each piece of sales information was obtained, and the time information indicating such time (namely, the order time or checkout time) can be retrieved from the sales information storage unit 41.

The category-based customer number obtaining unit 55 executes a process of obtaining the number of customers in each category for each time slot by reflecting the customer category ratios for each time slot obtained by the customer category ratio obtaining unit 53 on the number of customers for the corresponding time slot obtained by the customer number obtaining unit 54. Specifically, in this process of obtaining the number of customers in each category, the number of customers in each category for each time slot is obtained by multiplying the number of customers (total number of customers) for each time slot by the ratio of the customer category for the corresponding time slot (ST304 in FIG. 6).

After the number of customers in each category for each time slot is obtained as described in the foregoing, the output information generation unit 56 shown in FIG. 3 executes a process of generating output information representing a result of analysis. In this output information generation process, customer category trend information (output information) relating to a trend of change in the number of customers in each category is generated based on a time series of number of customers in each category obtained for each time slot, and an analysis result screen (see FIG. 4) in accordance with this customer category trend information is displayed on the display units 13 and 17 of the PCs 3 and 7 (ST305 in FIG. 6).

It is to be noted that each of the processes (ST301 to ST305 in FIG. 6) executed by the customer category ratio obtaining unit 53, customer number obtaining unit 54, category-based customer number obtaining unit 55, and output information generation unit 56 may be performed by obtaining the customer category information and the sales information from the customer category information storage unit 52 and the sales information storage unit 41, respectively, at an appropriate timing. Thus, these processes may be performed every time the data necessary for executing the process of totaling for a predetermined time period (time slot) becomes available (for example, every time one hour lapses in the case where the totaling is performed on an hourly basis), or may be performed at a longer interval such that processes of totaling for different time slots are performed at the same timing.

Further, though in the present embodiment, the number of customers is entered by a restaurant staff member when the staff member takes orders, it is also possible to configure the POS workstation 4 to estimate the number of customers from the order content (ordered menu items, number of orders for each menu item) included in the sales information. As it is considered typical that each customer orders one main dish (a primary dish in a meal), the number of orders for main dishes can be used as the number of customers. In this case, though a larger error may be caused as compared to the case where a restaurant staff member enters the number of customers, the burden on the staff member can be reduced. Further, since an error in the number of customers may be caused due to data entry error by a restaurant staff member, it may be preferred to determine the number of customers based on both the number estimated from the number of orders for main dishes and the number entered by the staff member.

Further, in the present embodiment, the customer category identification is performed based on the image information provided by the camera 1 that captures images of customers entering through the doorway of the restaurant, and therefore, the time information associated with each piece of customer category information is provided as the time when the customer entered the restaurant or when an image of the customer was captured by the camera 1. On the other hand, the time information contained in each piece of sales information is the order time or checkout time obtained at the time when the orders were taken and the checkout was performed, respectively. Thus, there is a temporal difference between the time information associated with the customer category information and the time information contained in the sales information. Therefore, it may be preferred to correct such a temporal difference when the category-based customer number obtaining unit 55 reflects the customer category ratios for each time slot on the number of customers for each time slot. For example, in a case where the order time contained in the sales information is used, such correction may be performed by taking into account a wait time (e.g., 5 to 10 minutes) from the time when the customer enters the restaurant to the time when the orders are taken.

As described in the foregoing, in the present embodiment, by combining the customer category information obtained from the image information provided by the camera 1 and the sales information provided by the POS workstation 4, it is possible to perform analysis of the customer categories in detail and with high accuracy.

Namely, the customer category identification performed by identifying categories of customers based on the image information provided by the camera 1 capturing images of customers may fail sometimes, and only pieces of customer category information of customers for whom the customer category identification was successful are collected. However, failure of customer category identification does not occur particularly frequently for a particular customer category, and occurs uniformly for all customer categories. Further, the customer category identification may result in a significant error in the detected number of customers when a same person is detected multiple times. However, the multiple detection of a same person also does not occur particularly frequently for a particular customer category, and occurs uniformly for all customer categories. Therefore, even though the number of customers detected by the customer category identification may have a significant error, it can be ensured that the customer category ratios obtained have sufficient accuracy.

On the other hand, the number of customers obtained from the sales information provided by the POS workstation 4, which may be entered by a restaurant staff member when the staff member takes orders or may be estimated from the number of orders for main dishes, also has sufficient accuracy. Therefore, by reflecting the customer category ratios obtained based on the image information on the number of customers obtained based on the sales information, it is possible to obtain the number of customers in each category with high accuracy. This allows analysis of the customer categories to be performed with high accuracy, thereby providing information useful in developing measures for improving the customer satisfaction and increasing the sales and profit.

It is to be noted that, with regard to a restaurant such as a casual dining restaurant, in a case where customers visit the restaurant in a group, it is often the case that some member(s) in the group pays for all their orders including those of the other members in the group, and therefore, the customer category identification performed at the time of checkout, as is performed in a retail store such as a convenience store, may fail to detect the customers who do not have to check out at the checkout counter, and thus, customer category data may not be obtained with sufficient accuracy. However, in the present embodiment, since the customer category identification is performed based on the image information provided by the camera 1 that captures images of customers entering through the doorway of the restaurant, it is possible to perform the customer category identification on all customers visiting the restaurant.

In the case where the customer category identification is performed based on the image information provided by the camera 1 that captures images of customers entering through the doorway of the restaurant, however, the customer category identification needs to be performed on a moving person, and thus, a same person may be detected multiple times, and this can result in a number of customers obtained that is significantly larger than the actual number. However, in the present embodiment, the number of customers is obtained from the sales information provided by the POS workstation 4, and the number of customers in each category is obtained by reflecting the customer category ratios obtained from the image information on the number of customers obtained from the sales information, and thus, the number of customers in each category can be obtained with high accuracy.

Further, in the present embodiment, customer category trend information relating to a trend of change in the number of customers in each category obtained for each time slot is generated, and an analysis result screen (see FIG. 4) in accordance with this customer category trend information is displayed, and therefore, it is possible for a user to know how the customer category characteristics change depending on the time slot. This makes it possible to make preparations at the restaurant in accordance with the change in the customer category characteristics; for example, it is possible to vary assignment of staff members in the kitchen in accordance with the change in the customer category characteristics, such that menu items matching the customer category characteristics can be prepared quickly and the wait time of the customers can be reduced, whereby the customer satisfaction is improved. Further, this makes it possible to reduce unnecessary staffing and run the restaurant efficiently, thereby increasing the profit of the restaurant.

Next, description will be made of customer category vs. menu item information obtaining process executed by customer category analysis unit 32 of the PC 3 set up at a restaurant. This customer category vs. menu item information obtaining process is a process of obtaining customer category vs. menu item information showing the characteristics of customer categories for each time slot (predetermined time period) and the characteristics of menu items ordered during the corresponding time slot in contrast with each other.

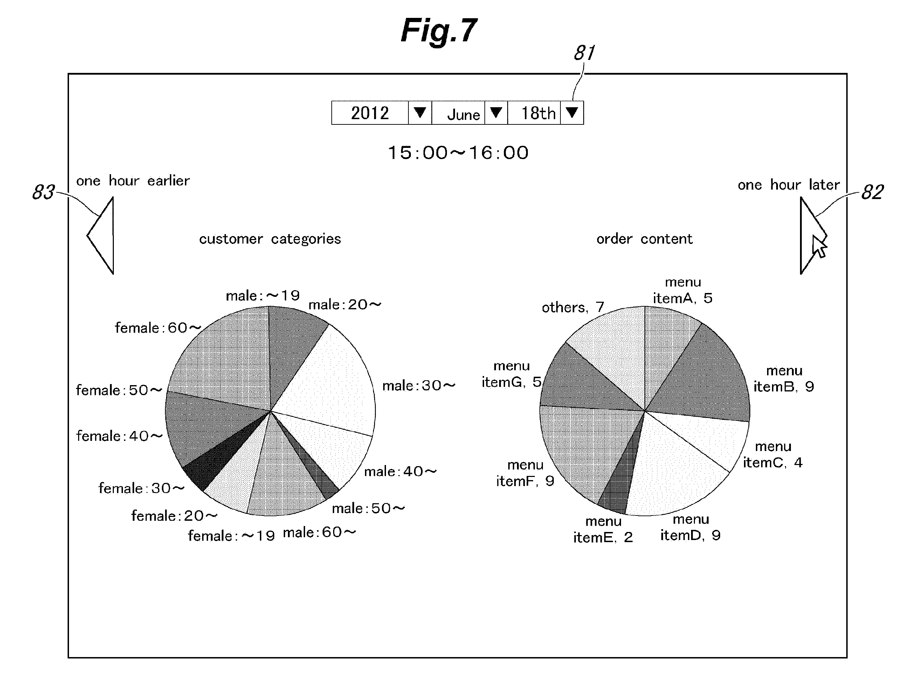

FIG. 7 is an explanatory diagram showing an example of an analysis result screen displaying customer category vs. menu item information. This analysis result screen is to be displayed on the display unit 13 of the PC 3 set up at the restaurant and the display unit 17 of the PC 7 set up at the management office. This analysis result screen shows, as the customer category vs. menu item information, customer category ratios and menu item order ratios, each in the form of a pie chart, for a designated time slot on a designated date. This analysis result screen allows the customer category ratios and the menu item order ratios for the same time slot to be presented in contrast with each other.

Further, this analysis result screen includes an operation element 81 for designating a year, month and day, such that the user can choose a date by operating the operation element 81 and view the analysis result on the chosen date. Furthermore, the analysis result screen includes operation elements 82 and 83 for changing the time slot, such that the user can put the time slot forward and backward by one hour by operating the operation elements 82 and 83, respectively, and thus, the user can view the analysis result of a desired time slot.

This analysis result screen is generated by a customer category vs. menu item information obtaining process executed by the customer category analysis unit 32 of the PC 3. The customer category analysis unit 32 includes, as units relating to the customer category vs. menu item information obtaining process, the customer category ratio obtaining unit 53, an order ratio obtaining unit 57 and the output information generation unit 56, as shown in FIG. 3.

As described in the foregoing, the customer category ratio obtaining unit 53 obtains pieces of customer category information from the customer category information storage unit 52, and based on the pieces of customer category information, executes a process of obtaining customer category ratios for each time slot.

The order ratio obtaining unit 57 first totals the number of orders for each menu item ordered by customers during each time slot (one hour), which defines a unit time period for totaling, to thereby obtain the number of orders for each menu item for each time slot, and then, converts the number of orders for each menu item for each time slot to a ratio to the total number of orders for each time slot to obtain an order ratio of each menu item for each time slot. This order ratio obtaining process is executed based on the sales information cumulatively stored in the sales information storage unit 41. As described in the foregoing, the sales information storage unit 41 cumulatively stores, as the sales information, order content (ordered menu items, number of orders for each menu item), order time and checkout time, and the totaling of the number of orders for each menu item for each time slot is performed based on the order time or the checkout time.

The output information generation unit 56 executes a process of generating, based on the customer category ratios for each time slot obtained by the customer category ratio obtaining unit 53 and the menu item order ratios for each time slot obtained by the order ratio obtaining unit 57, customer category vs. menu item information (output information) that presents the customer category ratios and the menu item order ratios for each time slot in contrast with each other, and causes an analysis result screen (see FIG. 7) in accordance with the customer category vs. menu item information to be displayed on the display units 13 and 17 of the PCs 3 and 7.

As described in the forgoing, in the present embodiment, customer category vs. menu item information that presents the customer category ratios and the menu item order ratios for each time slot in contrast with each other is generated, and an analysis result screen (see FIG. 7) in accordance with the customer category vs. menu item information is displayed. Therefore, it is possible for a user to compare the customer category ratios and the menu item order ratios for the same time slot to determine whether the menu offered by the restaurant is appropriate. For example, when the comparison between the customer category ratios and the menu item order ratios for the same time slot shows a mismatch between an expected number of orders for a certain menu item, which may be aimed at customers of a particular customer category(s), and an actual number of orders for the menu item, it can be determined that the menu item is not as attractive to customers of the target customer category(s) as expected, and, such an insight can help a user review the list of menu items to be offered, to thereby improve the customer satisfaction and increase the sales and profit.

Next, description will be made of a customer group type-based order trend obtaining process executed by the customer category analysis unit 32 of the PC 3 set up at a restaurant. This customer group type-based order trend obtaining process is a process of obtaining customer group type-based order trend information representing a trend of change in the number of orders made by each customer group type for each menu item depending on the time slot (predetermined time period).

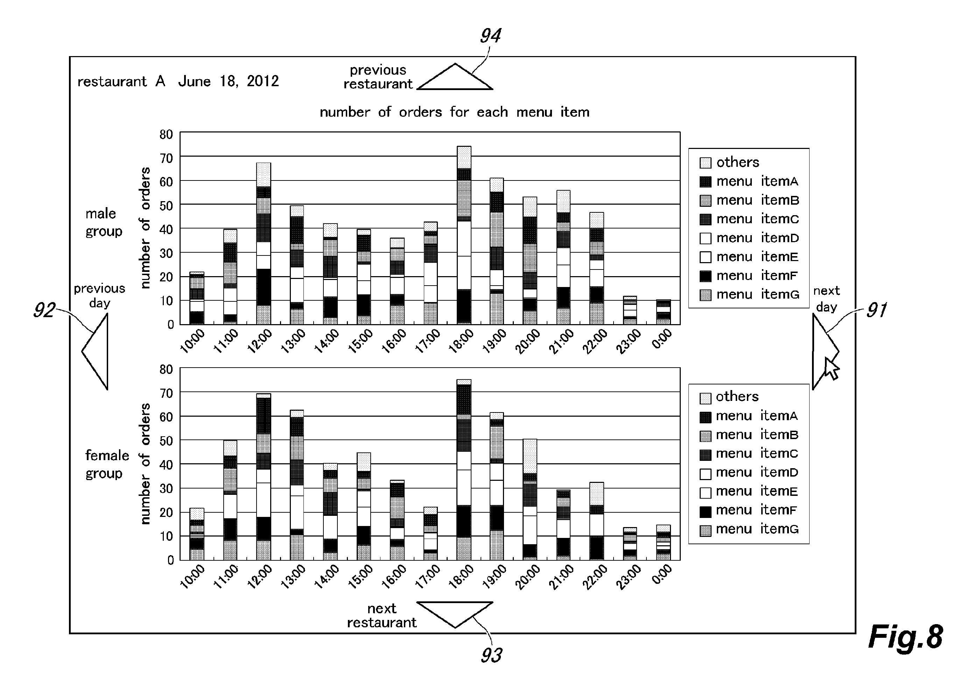

FIG. 8 is an explanatory diagram showing an analysis result screen displaying the customer group type-based order trend information. This analysis result screen is to be displayed on the display unit 13 of the PC 3 set up at the restaurant and the display unit 17 of the PC 7 set up at the management office. This analysis result screen includes two stacked bar charts that show, as the customer group type-based order trend information, the number of orders for each menu item relative to the total number of orders for all menu items counted for respective customer group types (male group and female group) for each time slot during opening hours of the restaurant on a designated date. From this analysis result screen, a user can understand the total number of orders for all menu items for each time slot as well as the number of orders for each menu item for each time slot, where the number of orders for each menu item provides a breakdown of the total number of orders for all menu items.

It is to be noted here that the customer group type (male group or female group) is determined for each customer group based on a ratio between the number of male members and the number of female members included in the group, where a male group is a group in which male members are a majority and a female group is a group in which female members are a majority.

Further, this analysis result screen includes operation elements 91 and 92 for changing the date, such that the user can put the date forward and backward by one day by operating the operation elements 91 and 92. Further, the analysis result screen includes operation elements 93 and 94 for changing the restaurant, such that the user can change the restaurant by operating the operation elements 93 and 94. It is to be noted here that the PC 3 of each restaurant can obtain data necessary to display analysis result of another restaurant from the PC 7 or POS server 8 set up at the management office or the PC 3 set up at the other restaurant via the IP network (see FIG. 1).

This analysis result screen is generated by a customer group type-based order trend obtaining process executed by the customer category analysis unit 32 of the PC 3. The customer category analysis unit 32 includes, as units relating to the customer group type-based order trend obtaining process, the customer category identification unit 51, a customer group-based number-of-orders obtaining unit 58, and the output information generation unit 56, as shown in FIG. 3.

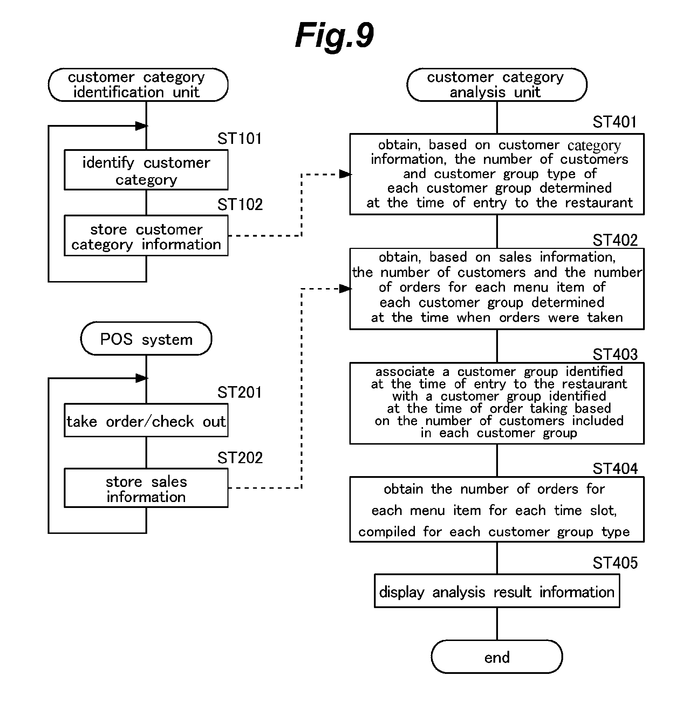

FIG. 9 is a flowchart showing a procedure of the customer group type-based order trend obtaining process executed by the customer category analysis unit 32. In the following, the content of the process executed by the various units in the customer category analysis unit 32 shown in FIG. 3 will be described with reference to FIG. 9.

When performing customer category identification (ST101 in FIG. 9) based on the images captured by the camera 1 that captures image of customers entering the doorway of the restaurant, the customer category identification unit 51 determines that customers entering the restaurant at a time form one customer group and obtains the number of customers in the customer group. Further, based on the gender of each customer included in the customer group, the customer category identification unit 51 determines the customer group type (male group or female group) of the customer group based on whether the male members or the female members are a majority in the customer group. The number of customers and the customer group type of each customer group obtained at the time of entry to the restaurant are cumulatively stored in the customer category information storage unit 52 together with the customer category of each customer and the time of entry to the restaurant as customer category information (in FIG. 9 ST102). It is to be noted that a customer entering the restaurant alone is regarded as forming a customer group consisting of a single member.

On the other hand, in the POS system, when a restaurant staff member takes orders from a customer(s) (ST201 in FIG. 9), the staff member takes orders table by table, and regards the customers seated at the same table as one customer group, and the staff member enters the number of customers in the customer group into the handy terminal 5 together with the table number and the number of orders for each menu item ordered. The information entered is transmitted to the POS workstation 4 together with the order time, and is cumulatively stored in the sales information storage unit 41 of the POS workstation 4 as sales information (in FIG. 9 ST202). It is to be noted that a customer seated at the table alone is regarded as forming a customer group consisting of a single member.

The customer group-based number-of-orders obtaining unit 58 first executes a process of obtaining pieces of customer category information from the customer category information storage unit 52 and obtaining the number of customers and the customer group type of each customer group identified at the time of entry to the restaurant included in each of the pieces of customer category information (ST401 in FIG. 9).

Further, the customer group-based number-of-orders obtaining unit 58 executes a process of obtaining pieces of sales information from the sales information storage unit 41 of the POS workstation 4, and, based on the pieces of sales information, obtaining the number of customers and the number of orders for each menu item for each customer group identified at the time of order taking (ST402 in FIG. 9).

Then, the customer group-based number-of-orders obtaining unit 58 executes a process of associating a customer group identified at the time of entry to the restaurant with a customer group identified at the time of order taking based on the number of customers included in each customer group (ST403 in FIG. 9). In the present embodiment, the customer groups are assessed by the number of customers included therein, and the customer groups having the same number of customers are determined to be the same customer group. It is to be noted that usually there is a substantially constant time difference of about 5 to 10 minutes between the time when a customer group enters the restaurant and the time when orders are taken from the customer group, and thus, by taking this time difference into account, it is possible to narrow down, in terms of time, the customer groups that can be candidates for association.

Next, the customer group-based number-of-orders obtaining unit 58 executes a process of totaling the number of orders for each menu item separately for each customer group type and each time slot, to thereby obtain the number of orders for each menu item for each time slot, compiled for each customer group type (ST404 in FIG. 9). It is to be noted here that for each customer group identified at the time of entry to the restaurant, a customer group type has been determined, and for each customer group identified at the time of order taking, a number of orders for each menu item ordered by the customer group has been determined, and thus, by associating a customer group identified at the entry to the restaurant with a corresponding customer group identified at the time of order taking, it is possible to obtain the customer group type, the number of orders for each menu item, the time of entry to the restaurant and the order time for each customer group. This makes it possible to execute the process of totaling the number of orders for each menu item separately for each customer group type and each time slot.

After the number of orders for each menu item for each time slot is obtained for each customer group type, the output information generation unit 56 shown in FIG. 3 executes a process of generating output information representing a result of analysis. In this output information generation process, customer group type-based order trend information (output information) relating to a trend of change in the number of orders for each menu item is generated for each customer group, based on a time series of number of orders for each menu item for each time slot, and an analysis result screen (see FIG. 8) in accordance with the customer group type-based order trend information is displayed on the display units of the PCs 3 and 7 (ST405 in FIG. 9).

It is to be noted that, though in the present embodiment, association of a customer group identified at the time of entry to the restaurant with a customer group identified at the time of order taking is performed based on the number of customers included in each customer group, the association between customer groups may be performed based on person tracking utilizing image recognition technology. Namely, the association between customer groups can be carried out by identifying, by use of person tracking technology, the table each customer group is ushered to after customer category identification has been performed on the customer group at the doorway of the restaurant.

Further, though in the present embodiment, the customer group types include a male group and a female group, additional customer group types may be added, such as a couple of a man and a woman or a family including a man, a woman and a child, which cannot be identified as a male group or a female group.

As described in the foregoing, in the present embodiment, customer group type-based order trend information relating to a trend of change in the number of orders for each menu item for each time slot is generated for each customer group type (male group or female group), and an analysis result screen (see FIG. 8) in accordance with the customer group type-based order trend information is displayed, and therefore, it is possible for a user to understand, for each customer group, how the ordered menu items changed depending on the time slot.

In the present embodiment, description was made of an exemplary case in which the invention was applied to a restaurant such as a casual dining restaurant. However, the present invention may be applied to a commercial establishment other than a restaurant, such as a retail store, which can be a convenience store, etc.

Further, though in the present embodiment, description was made of an example in which the entirety of the customer category analysis process was executed by the PC 3 set up at the restaurant as shown in FIG. 3, the entirety of the customer category analysis process may be executed by another information processing device, such as the PC 7 set up at the management office or a cloud computer 21 forming a cloud computing system, as shown in FIG. 1, for example. Further, the customer category analysis process may be executed by cooperation of multiple information processing devices, in which case, the multiple information processing devices are configured to be able to communicate or share information with each other via a communication medium such as an IP network or LAN or via a storage medium such as a hard disk or a memory card. Thereby, the multiple information processing devices jointly executing the customer category analysis process constitute a customer category analysis system.

In this case, it is preferred that the PC 3 set up at the restaurant be configured to execute at least the customer category identification process. In such a structure, since the customer category information obtained by the customer category identification process has a small amount of data, even if the remaining processes are performed by an information processing device set up at a place other than the restaurant, such as the PC 7 set up at the management office, the communication load can be small, and thus, it is easy to operate the system in the form of a wide area network.

It may be also preferred that the cloud computer 21 be configured to perform at least the customer category identification process. In such a structure, although the customer category identification process requires a large amount of computation, this is achieved by the information processing device constituting a cloud computing system, and therefore, it is not necessary to prepare a high-speed information processing device on the user side; namely at the restaurant or the like. Further, since the remaining processes require a small amount of computation, the remaining processes can be executed as extended functions of an information processing device set up at the restaurant to serve as the sales information management device, and this can reduce the cost born by the user.

The cloud computer 21 may be configured to execute the entirety of the customer category analysis process. In such a structure, it becomes possible to view the analysis result on a mobile terminal such as a smartphone 22 in addition to the PC 3 set up at the restaurant and the PC 7 set up at the management office, and this allows a user to view the result of analysis of the customer categories not only at the restaurant or the management office but also at any other place, such as a place the user is visiting on business.

Further, though in the present embodiment, the PC 3 set up at the restaurant and the PC 7 set up at the management office are used to view the customer category analysis result, it is possible to provide a browser device for viewing the customer category analysis result separately from the PCs 3 and 7. For example, it is possible to use a smartphone 22 as a browser device for viewing the customer category analysis result as described in the foregoing, or to provide the POS workstation 4 with a function of a browser device for viewing the customer category analysis result. Further, though in the present embodiment, the customer category analysis result is displayed on the display units 13 and 17 to enable a user to view the customer category analysis result, it is possible to output the customer category analysis result through a printer.

Further, in the present embodiment, the PC 3 executing the customer category analysis process obtains sales information from the POS workstation 4 set up at each restaurant. However, an information processing device such as the PC 3 executing the customer category analysis process may be configured to obtain sales information from the POS server 8 set up at the management office.

Further, though in the present embodiment, the customer categories are defined on both gender and age, it is possible to define the customer categories based on either gender or age, or on any other attribute(s) such as race. Further, in the present embodiment, each customer category has a 10-year age range (except for the uppermost and lowermost customer categories), but the customer categories may be defined to have age ranges different from those illustrated in the embodiment.

Yet further, though in the present embodiment, the time slots each having a duration of one hour define time periods for totaling, the time periods for totaling are not limited to the illustrated embodiment, and may have any duration such as one hour to several hours, one day to several days, one week to several weeks, one month to several months, etc., depending on the user needs.

The customer category analysis device, customer category analysis system and customer category analysis method according to the present invention have an advantage of capable of performing analysis of the customer categories of customers visiting a commercial establishment with high accuracy, and thus, are useful as a customer category analysis device, customer category analysis system and customer category analysis method for analyzing customer categories of customers visiting a commercial establishment.

The contents of the original Japanese patent application(s) on which the Paris Convention priority claim is made for the present application as well as the contents of the prior art references mentioned in this application are incorporated in this application by reference.

## Claims

1. A customer category analysis device (32) for analyzing customer categories of customers visiting a commercial establishment, comprising:
a customer category identification unit (51) configured to identify a customer category of each customer based on image information provided by an imaging device (1) capturing images of customers and obtain customer category information indicating a result of identification;
a customer category ratio obtaining unit (53) configured to obtain customer category ratios based on the customer category information;
a customer number obtaining unit (54) configured to receive, from a sales information management device (4) that manages sales information relating to customer's order and payment, the sales information, and obtain a number of customers based on the sales information;
a category-based customer number obtaining unit (55) configured to temporally associate a time period in which the customer category ratios are obtained by the customer category ratio obtaining unit with a time period in which the number of customers is obtained by the customer number obtaining unit, and determine a number of customers in each category by reflecting the customer category ratios on the number of customers; and
an output information generation unit (56) configured to generate output information representing a result of analysis based on the number of customers in each category.

2. The customer category analysis device according to claim 1, wherein the output information generation unit generates, as the output information, customer category trend information relating to a trend of change in the number of customers in each category based on a time series of number of customers in each category obtained for every predetermined time period.

3. The customer category analysis device according to claim 2, wherein the customer category trend information represents a ratio of the number of customers in each category to a total number of customers obtained every said predetermined time period within daily opening hours of the commercial establishment.

4. The customer category analysis device according to any one of claims 1 to 3, wherein the customer category information includes at least one of gender and age.

5. A customer category analysis system for analyzing customer categories of customers visiting a commercial establishment, comprising:
an imaging device (1) capturing images of customers;
a sales information management device (4) configured to manage sales information relating to customer's order and payment; and
a plurality of information processing devices (3, 7, 21),
wherein the plurality of information processing devices jointly comprise:
a customer category identification unit (51) configured to identify a customer category of each customer based on image information provided by the imaging device and obtain customer category information indicating a result of identification;
a customer category ratio obtaining unit (53) configured to obtain customer category ratios based on the customer category information;
a customer number obtaining unit (54) configured to receive the sales information from the sales information management device and obtain a number of customers based on the sales information;
a category-based customer number obtaining unit (55) configured to temporally associate a time period in which the customer category ratios are obtained by the customer category ratio obtaining unit with a time period in which the number of customers is obtained by the customer number obtaining unit, and determine a number of customers in each category by reflecting the customer category ratios on the number of customers; and
an output information generation unit (56) configured to generate output information representing a result of analysis based on the number of customers in each category.

6. The customer category analysis system according to claim 5, wherein one (3) of the information processing devices is set up at the commercial establishment and includes at least the customer category identification unit.

7. The customer category analysis system according to claim 5, wherein one (21) of the information processing devices constitutes a cloud computing system and includes at least the customer category identification unit.

8. The customer category analysis system according to any one of claims 5 to 7, wherein the imaging device is configured to capture images of customers entering through a doorway of the commercial establishment.

9. A customer category analysis method for analyzing customer categories of customers visiting a commercial establishment, comprising:
identifying a customer category of each customer based on image information provided by an imaging device capturing images of customers, and obtaining customer category information indicating a result of identification (ST101);
obtaining customer category ratios based on the customer category information (ST302);
receiving, from a sales information management device (4) that manages sales information relating to customer's order and payment, the sales information, and obtaining a number of customers based on the sales information (ST303);
temporally associating a time period in which the customer category ratios are obtained with a time period in which the number of customers is obtained and determining a number of customers in each category by reflecting the customer category ratios on the number of customers (ST304); and
generating output information representing a result of analysis based on the number of customers in each category (ST305).
